# EUROPEAN PATENT SPECIFICATION

(11) **EP 4 478 891 B1**
(45) Date of publication and mention of the grant of the patent: **09.09.2026**
(21) Application number: 23707425.7
(22) Date of filing: 17.02.2023
(51) Int. Cl.: A23D 9/007, A21D 2/18, A23L 29/262, A23L 33/115, A23L 33/24

(54) **A COMPOSITION COMPRISING AN OLEOGEL AND A METHOD FOR PRODUCING A COMPOSITION COMPRISING AN OLEOGEL**
ZUSAMMENSETZUNG MIT EINEM OLEOGEL UND VERFAHREN ZUR HERSTELLUNG EINER ZUSAMMENSETZUNG MIT EINEM OLEOGEL
COMPOSITION COMPRENANT UN OLÉOGEL ET PROCÉDÉ DE PRODUCTION D'UNE COMPOSITION COMPRENANT UN OLÉOGEL

(30) Priority: 18.02.2022 FI 20225150
(43) Date of publication of application: 25.12.2024
(73) Proprietor: Perfat Technologies Oy, 00790 Helsinki (FI)
(72) Inventor: VALOPPI, Fabio, 00014 Helsingin yliopisto (FI); BHATTARAI, Mamata, 00014 Helsingin yliopisto (FI)
(74) Representative: Papula Oy
(86) International application number: PCT/FI2023/050097
(87) International publication number: WO 2023/156713

(56) References cited:
- CN-A- 107 296 260
- US-A1- 2019 307 144
- DAVIDOVICH-PINHAS M. ET AL: "The gelation of oil using ethyl cellulose", CARBOHYDRATE POLYMERS, vol. 117, 1 March 2015 (2015-03-01), GB, pages 869 - 878, XP093155421, ISSN: 0144-8617, DOI: 10.1016/j.carbpol.2014.10.035
- TOTOSAUS A. ET AL: "Influence of the type of cellulosic derivatives on the texture, and oxidative and thermal stability of soybean oil oleogel", GRASAS Y ACEITES, vol. 67, no. 3, 26 August 2016 (2016-08-26), SPAIN, pages e152, XP093119633, ISSN: 0017-3495, DOI: 10.3989/gya.0440161
- FLICKINGER BRENT D. ET AL: "Nutritional characteristics of DAG oil", LIPIDS, vol. 38, no. 2, 1 February 2003 (2003-02-01), DE, XP093155304, ISSN: 0024-4201, DOI: 10.1007/s11745-003-1042-8
- MOLENDA MAREK ET AL: "Microstructure and mechanical parameters of five types of starch", POLISH JOURNAL OF FOOD AND NUTRITION SCIENCES, vol. 15, no. 2, 1 January 2006 (2006-01-01), PL, pages 161 - 168, XP093293274, ISSN: 1230-0322, Retrieved from the Internet <URL:https://journal.pan.olsztyn.pl/pdf-97933-30529?filename=MICROSTRUCTURE%20AND.pdf>
- ANONYMUS: "ETHOCEL TM Ethylcellulose A Technical Review", TECHNICAL BULLETIN, 1 February 2016 (2016-02-01), Online, pages 1 - 12, XP093293239, Retrieved from the Internet <URL:http://ihanskorea.com/html/_skin/2/brochure/ETHOCEL_Ethylcellulose_A%20Technical%20Review.pdf>
- DAVID ANNABELLE ET AL: "Oleogelation of rapeseed oil with cellulose fibers as an innovative strategy for palm oil substitution in chocolate spreads", JOURNAL OF FOOD ENGINEERING, ELSEVIER, AMSTERDAM, NL, vol. 292, 12 September 2020 (2020-09-12), XP086400632, ISSN: 0260-8774, [retrieved on 20200912], DOI: 10.1016/J.JFOODENG.2020.110315
- SANCHEZ R ET AL: "Thermal and mechanical characterization of cellulosic derivatives-based oleogels potentially applicable as bio-lubricating greases: Influence of ethyl cellulose molecular weight", CARBOHYDRATE POLYMERS, APPLIED SCIENCE PUBLISHERS , LTD BARKING, GB, vol. 83, no. 1, 2011, pages 151 - 158, XP027353818, ISSN: 0144-8617, [retrieved on 20100723]
- NIKIFORIDIS CONSTANTINOS V. ET AL: "Polymer organogelation with chitin and chitin nanocrystals", RSC ADVANCES, vol. 5, no. 47, 2015, pages 37789 - 37799, XP093037605, DOI: 10.1039/C5RA06451A
- QI WENHUI ET AL: "Preparation and characterization of oleogel-in-water pickering emulsions stabilized by cellulose nanocrystals", FOOD HYDROCOLLOIDS, vol. 110, 2021, NL, pages 106206, XP093037757, ISSN: 0268-005X, DOI: 10.1016/j.foodhyd.2020.106206

## Description

### TECHNICAL FIELD

The present disclosure relates to a composition, a method for producing a composition, use of the composition, and a method for preparing laminated dough.

### BACKGROUND

Substitutes for saturated and hydrogenated fat, which are known to contribute to cardiovascular diseases when consumed in large amounts, are sought for various food products. However, in certain food categories, such as puff pastry, saturated fat such as butter is not necessarily easily replaced.

Oleogels are a highly promising material to substitute saturated and hydrogenated fat, but due to their mechanical properties, they are typically not well suited for lamination during the preparation of the dough for puff pastry.

David et al., Journal of Food Engineering 292 (2021), 110315 describes oleogelation of rapeseed oil with cellulose fibers as an innovative strategy for palm oil substitution in chocolate spreads.

US 2019/307144 describes oil compositions comprising one or more ethylcellulose polymers, an additive, one or more starch, and one or more oils.

Nikiforidis and Scholten, RSC Advances 2015, 5, 37789-37799 describes polymer organogelation with chitin and chitin nanocrystals.

Qi et al, Food Hydrocolloids 110 (2021) 106206 discloses preparation and characterization of oleogel-in-water pickering emulsions stabilized by cellulose nanocrystals.

CN 107 296 260 describes a preparation method of a high dietary-fiber oleogel.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A composition is disclosed. The composition comprises a mixture comprising an oleogel and a filler. The oleogel comprises a liquid or semi-solid fat composition and a gelator. The filler is in the form of solid particles. The composition is set out in the appended claims.

The invention is defined by the appended claims.

### BRIEF DESCRIPTION OF THE DRAWINGS

The accompanying drawings, which are included to provide a further understanding of the embodiments and constitute a part of this specification, illustrate embodiments and together with the description help to explain the principles. In the drawings:
**Figure 1****.** Visual appearance of oleogels containing increasing concentrations (2.5%, 5%, 10%, 20%, 30%, 40%, and 50%) of cellulose crystals (Arbocel, Vivapur, and DS-CNC). Plain oleogel (0% cellulose) is shown as a reference.
**Figure 2****.** Microscopic images of composite oleogels containing increasing concentrations (2.5%, 5%, 10%, 20%, and 30%) of cellulose fillers (Arbocel, Vivapur, and DS-CNC). Plain oleogel (0% cellulose) and celluloses dispersed in oil are shown as references. White arrows show the presence of crystalline spherulites.
**Figures 3A, 3B, 3C,** and **3D.** Stress versus strain curves of oleogels and dispersions containing celluloses (A) Arbocel (B) Vivapur, and (C) DS-CNC. (D) Critical strain as a function of cellulose amount calculated from the stress-strain curve.

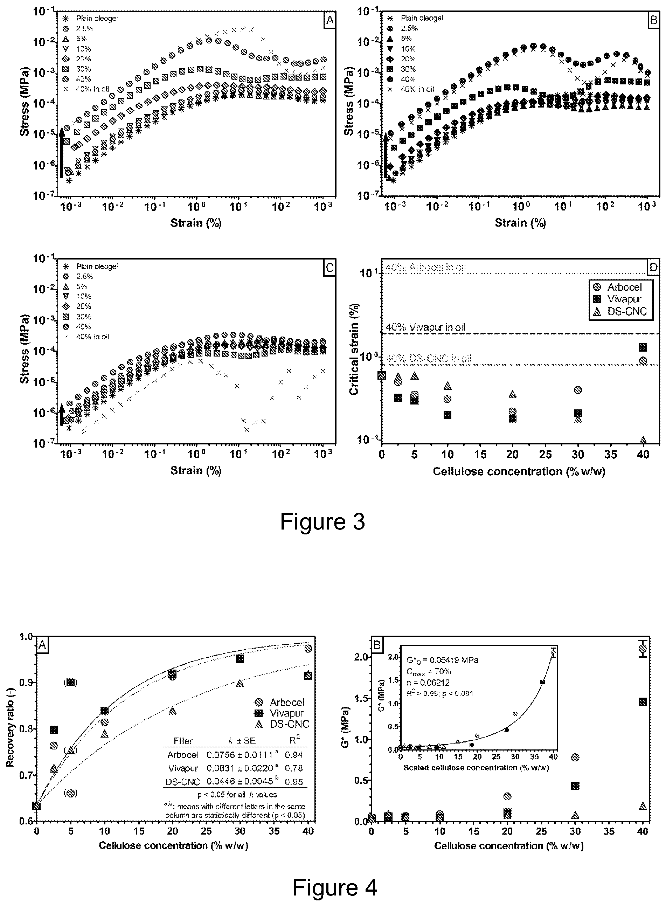

**Figures 4A** and **4B.** (A) Recovery ratio calculated using Complex modulus (G*) of composite oleogels from celluloses, Arbocel, Vivapur, and DS-CNC as a function of cellulose concentration. The rate constant (k) from fitting of the one-phase association model (Eq. 2) is presented in the table with statistical analysis of the estimate (k) (inset in panel A). The data points in panel A in brackets were excluded from regression analysis. (B) G* of the composite oleogels as a function of cellulose concentration. G* was calculated as an average value of initial four points excluding the first two points in the LVR. Inset in panel B: fitting of hyperbolic function to the scaled cellulose concentration.
**Figure 5****.** Oil release over oil weight by composite oleogels from celluloses, Arbocel, Vivapur, and DS-CNC as a function of cellulose concentration compared to plain oleogel.
**Figure 6****.** Macroscopic appearance of croissants obtained using laminating agent (top) 30 % Vivapur composite oleogel, (middle) mixture of 30 % Vivapur composite oleogel and butter (ratio of 2:1), and (bottom) butter.

### DETAILED DESCRIPTION

A composition is disclosed.

The composition comprises a mixture comprising an oleogel and a filler. The oleogel comprises a liquid or semi-solid fat composition and a gelator. The filler is in the form of solid particles.

The composition may be considered a composite oleogel.

The composition may be used to substitute fat components, such as butter, margarine or shortening, in the preparation of laminated pastries or other food products that typically may contain a significant amount of saturated fat.

The composition may have improved mechanical properties, for example as compared to various oleogel compositions, and may provide an improved structure for the food products in which it is used.

The composition may also help in providing a better nutritional profile for the food products than e.g. butter or other fat component which it may substitute, either partially or fully. For example, the composition and thereby the food product may include more mono- and polyunsaturated fats. Further, the filler may function as a source of fiber, such that the food product may have an increased fiber content. Thus the composition may lead to an increased fiber content without the addition of other fiber in the dough, which could affect the mouthfeel of the food product.

At the same time, the composition and the resulting food product may have a desirable texture and/or mouthfeel.

The filler is in the form of solid particles. In other words, the filler may be a particulate filler. For example, the filler may be in the form of a powder, or added to the composition as a powder. The filler may comprise or be e.g. fibers, or be in the form of fibers. The solid particles of the filler may be considered to be volume-filling particles. However, the filler as disclosed in the present specification may additionally function as a reinforcing filler material.

The filler may not be dissolved in the composition, i.e. it may be undissolved in the composition. The filler may not dissolve in the composition even when the composition is heated. The solid particles are thus inert particles that do not undergo a phase transition during the formation of the composition (i.e. when the liquid or semi-solid fat composition, the gelator and the filler are mixed at a temperature higher than the melting point of the gelator).

The filler may be a bio-based filler.

The filler (e.g. the polymer from which the filler may be formed) may comprise or be cellulose, such as crystalline cellulose; resistant modified starch; xylan nanocrystals; chitin nanocrystals; starch, such as resistant starch; β-glucan; or any mixture or combination thereof.

The filler may be crystalline cellulose. The crystalline cellulose may comprise or be cellulose micro- and/or nanocrystals. In other words, the crystalline cellulose may comprise or be microcrystalline and/or nanocrystalline cellulose. The crystalline cellulose is well suited as a filler due to its strength, biodegradability, and abundance. It may also have a tunable surface chemistry and a large surface area, which may allow for improved interfacial interactions.

The composition comprises about 20 to about 50 % (w/w), or 20 % to 45 % (w/w), or 30 % to 40 % (w/w) of the filler.

In general, an increase in the proportion and/or concentration of the filler may increase the stiffness and mechanical strength of the composition. Thus it may increase the resistance to large deformation and/or shear forces and reduce oil release from the composition. This may render the composition well suited for applications in which large deformation is applied, such as in lamination during puff pastry dough production. However, at high concentrations, the filler may render the composition brittle. The optimal proportion and/or concentration of the filler may also depend on the filler (e.g. the surface composition, shape, particle size of the filler and/or other considerations). A skilled person is capable of selecting a suitable concentration of the filler.

The gelator, such as a monoglyceride, forms crystals. The crystals, together with the filler, form a microstructure. Not to be bound by theory, it may be that the gelator crystals and solid particles of the filler may interact in complex ways, for example such that the filler affects the organization of the gelator crystals in the composition. The solid particles may provide a solid substrate for growing gelator crystals. Gelator crystals may then obtain a morphology of spherulites (at least partially). The filler, for example in the form of fibers, may act as nucleation points where the crystals of the gelator (for example a monoglyceride) start growing during cooling. Gelator crystals may continue growing till they interconnect. The gelator crystals thus form a crystalline network in which the filler, such as fibers, are embedded.

The morphology of the composite network formed by the gelator crystals and the filler may depend on the filler concentration and/or shape. However, using microscopy, it may be possible to observe that the gelator may form both spherulites and platelet-like crystals at low filler concentrations. At high filler concentrations, the network may be more crowded and jammed. In such a network, the gelators may have the function of connecting the filler particles besides gelling the oil.

If there is no gelator, the system may be less stable. The filler may sediment and oil may leak out from the composition, when the filler content is high enough (e.g. 20 - 40 % (w/w)) and the composition is stored for a sufficiently long period of time (e.g. 2-3 days or more). At low concentration of the filler, the composition may be liquid (similar to oil).

The composition may comprise about 90 to about 50 % (w/w) of the oleogel. The proportion of the oleogel may naturally depend e.g. on the proportion of the filler. Thus the composition may comprise about 80 to about 55 % (w/w) of the oleogel, or about 60 to about 70 % (w/w) of the oleogel. The proportion of each component and/or all components in the composition may be selected so that they add up to 100 % (w/w). Naturally the composition may comprise also other components and/or additives.

The filler may be blended with the oleogel.

The shapes and/or sizes of the solid particles are not particularly limited. However, solid particles with certain dimensions may provide certain properties to the composition. For example, solid particles that have an elongated shape may allow for better properties for the composition than **e.g.** solid particles with spherical shapes.

The solid particles of the filler may have specific shapes. They can be produced such that they have specific shapes. For example, such solid particles of the filler may be formed from polymers (such as any one of the polymers described below) dissolved in water or a suitable solvent. They can be spray dried or antisolvent precipitated to obtain spherical/elongated particles. In the case of antisolvent precipitation, they may subsequently be dried.

The solid particles have an average particle size in the range of 100 nm to 150 µm. In an embodiment, the solid particles have an average particle size in the range of 10 to 100 µm.

The solid particles may be in the shape of spheres and/or rods. Alternatively or additionally, the solid particles may be (at least roughly) in the shape of ellipsoids, cylinders, grain-shaped, granules, flakes and/or platelets. The solid particles may be in the form of various different shapes, **i.e.** a mixture of different shapes. The aspect ratio of the solid particles may be in the range of 1:1000000 to 1:1. The aspect ratio may be, at least in an embodiment, considered to be the ratio of the diameter, for example the mean diameter, to the length of the solid particles. In embodiments in which the filler comprises or is in the form of fibers, the fibers may have an aspect ratio in the range of 1:1000000 to 1:1.

The average particle size, the diameter and/or the average diameter may be measured e.g. by sieve analysis, i.e. by using a mesh, laser diffraction, or microscopy. The average particle size and/or the average diameter may be measured e.g. by the standard ISO 13320:2009.

The particle size of the filler may thus be selected or adjusted such that it is suitable. The filler may also be comminuted, for example milled, prior to the production of the composition. A filler with certain dimensions and/or average particle size may thus be obtained.

The filler may be dried prior to the production of the composition. The drying may remove residual humidity and may have an effect on the structure and/or mechanical properties of the composition.

The liquid or semi-solid fat composition may comprise or be a vegetable oil, such as rapeseed, canola, and/or palm oil; a long-chain triacyl glycerol; a medium-chain triacyl glycerol; a short-chain triacyl glycerol; or any combination or mixture thereof. However, other liquid or semi-solid fat compositions may be contemplated.

The gelator comprises or is a monoglyceride, a fatty acid, a fatty alcohol, or any mixture or combination thereof. For example, monoglycerides are well suited as a gelator. In particular, a crystalline cellulose as the filler and monoglyceride as the gelator may result in a composition with desirable properties. The term "monoglyceride" or "a monoglyceride" may be understood as referring to at least one monoglyceride, i.e. it may also refer to a mixture of different monoglyceride molecules.

The oleogel and/or the composition may comprise e.g. 50 to 99.5 % (w/w), or 60 to 95 % (w/w) of the liquid or semi-solid fat composition, such as oil. The oleogel and/or the composition may comprise e.g. 0.1 to 20 % (w/w), or 2.5 to 15 % (w/w) of the gelator.

The composition may be a semi-solid or solid composition. The structure of the composition may thus be such that although the fat in the composition as of itself may have been included as a liquid or semi-solid fat composition, the composition may be in semi-solid or solid form. For example, the composition may have a similar solidity as butter or a margarine.

The composition may be stable, or in the form of a stable gel. The composition may be considered to be stable when no oil leakage from the composition is observed during storage for a period of time, such as for at least a month, e.g. at room temperature or at 4 °C.

The composition may have a complex modulus in the range of 0.1 - 1.1 MPa and/or a yield stress in the range of 0.07 - 6 kPa. The yield stress may be yield stress measured during oscillation amplitude sweep performed at an angular frequency of 2 rad/s at room temperature. The yield stress may be measured e.g. as described in the Examples. By way of comparison, a similar composition (oleogel) that does not include the filler could have a complex modulus of about 0.04 MPa and a yield stress of about 0.08 kPa.

A method for producing a composition according to one or more embodiments disclosed in this specification is disclosed. The method may comprise mixing the liquid or semi-solid fat composition, the gelator and the filler at a temperature higher than the melting point of the gelator; and cooling the mixture, thereby obtaining the composition.

The filler may be added or mixed in a mixture of the liquid or semi-solid fat composition and the gelator either before heating, during heating, or during a period during which the mixture is held (and further stirred or otherwise mixed) at the temperature higher than the melting point of the gelator. In other words, in embodiments in which the liquid or semi-solid fat composition and the gelator form an oleogel, the filler may be added when the mixture (oleogel) is molten or during its cooling. The filler may thus be added before the crystalline structure of the oleogel starts forming and/or during its formation. In other words, the filler may be added before the crystalling structure of the oleogel is completely formed.

Oleogels are typically produced by mixing a gelator and a liquid or semi-solid fat composition at a temperature higher than the melting point of the gelator and by cooling the mixture, thereby obtaining the composition. In the present method, the filler may be included in the mixture. The filler however does not melt or dissolve in the mixture but remains as solid particles.

A composition obtainable by the method for producing a composition according to one or more embodiments disclosed in this specification is also disclosed.

However, there may be other methods for producing the composition, and of the oleogel.

In an example, a food product comprising or prepared using the composition according to one or more embodiments disclosed in this specification is also disclosed. The composition may comprise or be prepared using the composition as a fat component. For example, in food products in which butter may be used as the fat component, the butter may be at least partially, or fully, replaced by the composition according to one or more embodiments disclosed in this specification.

The food product may be a bakery product, such as a croissant, a puff pastry, or a Danish pastry; a dough, such as a laminated dough; a spread; ice cream; chocolate; or a meat or dairy analogue, such as a cheese mimetic.

The food product, such as a croissant, may comprise up to 20 % (w/w), or up to 15 % (w/w) of fat. It may comprise up to 10 % (w/w), or up to 5 % (w/w) of saturated fat. It may comprise at least 5 % (w/w) of fibers.

For example, a regular croissant made with butter as the fat component may comprise 21 % (w/w) of fat; 12 % (w/w) of saturated fat (57 % of the total fat content); and 1.3 % (w/w) of fibers.

For example, a comparative croissant made using a composition as described in this specification, comprising 30 % (w/w) of fibers as the filler, as a 100% substitute for the butter, may comprise 14.5 % (w/w) of fat; 2 % (w/w) of saturated fat (16 % (w/w) of the total fat); and 7.5 % (w/w) of fibers.

A comparative croissant with 100% substitution of butter with a composition as described in this specification, containing 40 % (w/w) of fibers as the filler, may comprise 12 % (w/w) of fat; 2 % (w/w) of saturated fat (15 % of the total fat content); and 9.6 % (w/w) of fibers.

Use of the composition according to one or more embodiments disclosed in this specification in laminating dough is also disclosed.

Use of the composition according to one or more embodiments disclosed in this specification in preparing a food product according to one or more embodiments disclosed in this specification is also disclosed.

A method for preparing a laminated dough is further disclosed. The method may comprise providing a dough and a composition according to one or more embodiments disclosed in this specification; disposing the composition on the dough, thereby forming a layered composition comprising a layer of the composition on a layer of the dough; and folding the layered composition on itself one or more than one time to form the laminated dough.

Methods for preparing a laminated dough using e.g. butter instead of the composition according to one or more embodiments disclosed in this specification are well known in the art.

### EXAMPLES

Reference will now be made in detail to various embodiments, an example of which is illustrated in the accompanying drawings.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### EXAMPLE 1 - Size-dependent filling effect of crystalline celluloses in structural engineering of composite oleogels

Monoglyceride-based crystalline cellulose-filled composite oleogels were developed. The functionality of fillers in a composite matrix depends on particle size, particle loading, and particle-matrix interface interaction. To investigate this effect, three cellulose crystals from micro- to nanoscale were used as fillers in a monoglyceride-based oleogel. The effect of progressive addition of crystalline celluloses on the mechanical properties at small- and large-amplitude oscillation strain were studied. To understand the filler-matrix interaction, the micro- and nanostructure of the composite oleogel network were studied by microscopy, synchrotron X-ray diffraction, and small-angle X-ray scattering techniques. Finally, the melting properties and oil-retention ability of the composite oleogels were investigated.

The results demonstrate that crystalline celluloses of different sizes can be used to engineer the structure of oleogels for tunable mechanical properties. Novel functional composite lipid-based materials can be obtained via cellulose micro- and nanocrystals in oleogels that offer better mechanical properties. Such materials can be used in applications such as fat substitutes, leading to nutritionally superior food products with increased fiber content.

### Materials

Dry microcrystalline celluloses Arbocel M80 (bulk density 0.20-0.24) and Vivapur 105 (bulk density max 0.26), were kindly provided by JRS Pharma Oy (Nastola, Finland). Desulfated cellulose nanocrystals (DS-CNC) slurry was purchased from Cellulose Lab (Fredericton, Canada). The slurry was freeze dried followed by milling for 1 min using a Siebtechnik Tema vibratory mill (Rijswijk, Netherlands) mounting concentric stainless-steel discs. The average particle size of crystalline celluloses decreased in the following order (data provided by the manufacturer): Arbocel (55 µm), Vivapur (15 µm), and DS-CNC (10-20 nm width, 50-400 nm length). All celluloses were dried for 5 days in a vacuum oven at 30-40°C before use. Myverol 18-04 K saturated monoglyceride (fatty acid composition: 42-48%, C16:0, 50-60% C18:0; melting point 68.05 ± 0.5°C) was donated by Kerry Ingredients and Flavours (Bristol, UK). Rapeseed oil from Raisio was purchased from a local supermarket. Isobutanol was purchased from Merck KGaA (Darmstadt, Germany).

### Oleogel preparation

First, a monoglyceride-containing oleogel was prepared by mixing 5% monoglycerides with rapeseed oil at 80°C for at least 10 min. The molten mixture was then blended with increasing weight fractions (0, 2.5, 5, 10, 20, 30, 40, and 50%) of crystalline celluloses (Arbocel, Vivapur, or DS-CNC). The blends were mixed using a magnetic stirrer (or a spatula for samples containing 40% and 50% crystalline cellulose) at 80°C for at least 10 min. Samples were then poured in containers for further analysis and crystallized by immersing the container in a water bath at 20 °C (10-20 min). Samples were stored at room temperature overnight before analyses. Dispersions of celluloses were prepared by mixing 40% cellulose in rapeseed oil at room temperature. All concentrations are expressed as mass percentage (% w/w).

### Macroscopic pictures

An aliquot of oleogel was placed on a black cardboard base and imaged using a 12 MP camera with an aperture of f/2.2. Pictures were taken in a photographic cabinet under D65 illuminant.

### Rheology

Large amplitude oscillatory shear (LAOS) and small amplitude oscillatory shear (SAOS) measurements were performed on a hybrid rheometer Discovery HR-2 (TA Instruments, Delaware, USA) with a 20-mm parallel plate geometry. Sandpaper with an average grit of 600 was glued on both plates to prevent samples from slipping during measurement. Samples were carefully placed between the plates with a gap of 3-3.5 mm. Axial force was allowed to stabilize for 2-3 min before the measurement. For the LAOS and SAOS measurements, an oscillation strain 0.001-1000% and 0.001-100% were applied, respectively, with an angular frequency of 2 rad/s. To study the recovery of oleogels, two amplitude sweeps were recorded during SAOS measurements. First, an oscillation strain of 0.001-100% was applied, followed by a 5-min rest period, and a second sweep was performed on the same sample with an oscillation strain of 0.001-100%. All measurements were performed at 22°C. Measurement data were collected in transient mode by Trios software 5.1 (TA Instruments). Sampling time was 8 cycles of sinusoidal waves with 191.75 points per cycle. The yield stress and critical strain % were calculated as an intersection point of two linear lines in the stress-strain curve (Dinkgreve et al., 2016, Journal of Non-Newtonian Fluid Mechanics, 238, 233-241, https://doi.org/10.1016/j.jnnfm.2016.11.001). Analysis of the LAOS response was performed according to Macias-Rodriguez et al., 2018, Rheologica Acta, https://doi.org/10.1007/s00397-018-1072-1.

The recovery ratio (*Rᵣ*) of oleogel samples was calculated using the following equation: ${R}_{r} = \frac{\left({G}_{1}^{∗}-{G}_{2}^{∗}\right)}{{G}_{1}^{∗}}$ where *G*₁* and *G*₂* are the average complex moduli from the first and second amplitude sweeps in the viscoelastic region, respectively.

The recovery ratio as a function of cellulose concentration was fit using a one-phase association model: ${R}_{r} = {R}_{r 0} + \left(P-{R}_{r 0}\right) ⋅ \left(1-{e}^{- k ⋅ C}\right)$ where *Rᵣ₀* is the theoretical recovery ratio of the plain oleogel (set to 0.6339), P is the plateau value that is the maximum theoretical recovery ratio (in this case equal to 1), *k* is the rate constant, and C is the cellulose concentration expressed as weight percentage over the total composite oleogel weight.

The complex modulus G* as a function of cellulose concentration was fit using a Krieger-Dougherty type equation (Krieger and Dougherty, 1959, Transactions of the Society of Rheology, 3, 137-152, https://doi.org/10.1122/1.548848): ${G}^{∗} = {G}_{0}^{∗} ⋅ {\left(1-\frac{c}{{c}_{max}}\right)}^{- n ⋅ {C}_{max}}$ where *G*₀* is the complex modulus at 0% cellulose concentration, *Cₘₐₓ* is the maximum mass cellulose concentration (vertical asymptote of the hyperbolic function), and n is a fitting constant. To further analyze the data, cellulose concentration was divided by a scaling factor that was arbitrarily chosen to be positively correlated with cellulose particle size and set to Arbocel = 1; Vivapur = 1.08; DS-CNC = 2.7.

The recovery ratio and the G*, both as a function of cellulose concentration, were fitted using TableCurve 2D version 5.01 (Jandel Scientific Software, San Rafael, CA, USA). Non-linear regression analysis was performed. The Levenberg-Marquardt algorithm was used to perform least-squares function minimization. Goodness of fit was evaluated based on statistical parameters of fitting (R², p, standard error) and the residual analysis.

### Polarized light microscopy

The microstructure of oleogels was analyzed using an Axio Lab A1 polarized light microscope (Zeiss, Oberkochen, Germany) connected with an Axiocam 305 color (Zeiss). An aliquot of the sample was placed in the middle of a glass slide and a glass coverslip was centered above the sample and gently pressed. Samples were analyzed at room temperature using a 20× objective. Images were acquired and processed using the application software ZEN 2.6 (Zeiss). Images were saved in *tiff* format and were 2464 × 2056 pixels.

### Accelerated oil release test

Approximately 1.2-1.3 mL of molten sample was poured into 1.5-mL microtubes (Eppendorf, Hamburg, Germany) and cooled in a water bath at 20°C for 10 min. After overnight storage at room temperature, samples were centrifuged at 17 000 rpm (27464 × g) for 30 min using a temperature-controlled SL 8R centrifuge (Thermo Scientific, Osterode am Harz, Germany) set at 20°C. Preliminary tests confirmed that multiple centrifugations did not increase the temperature of samples, which was maintained at 21 ± 1°C. Immediately after centrifugation, Eppendorf tubes were inverted, and oil was drained for 5 min. The residual oil was then removed using absorbent paper. The released oil was computed as a percentage ratio between the mass of expressed oil over the total mass of the sample or the total mass of oil contained in the oleogel.

### Data analysis

All determinations were expressed as mean ± standard deviation of at least two measurements from two experimental replicates (n ≥ 2 × 2) if not otherwise specified. Statistical analysis was performed using R software version 3.5.1. Bartlett's test was used to assess the homogeneity of variance. One-way ANOVA was performed and Tukey's test was used as a post-hoc test to determine significant differences among means (p < 0.05).

### Macro-, micro-, and nanostructures of oleogels

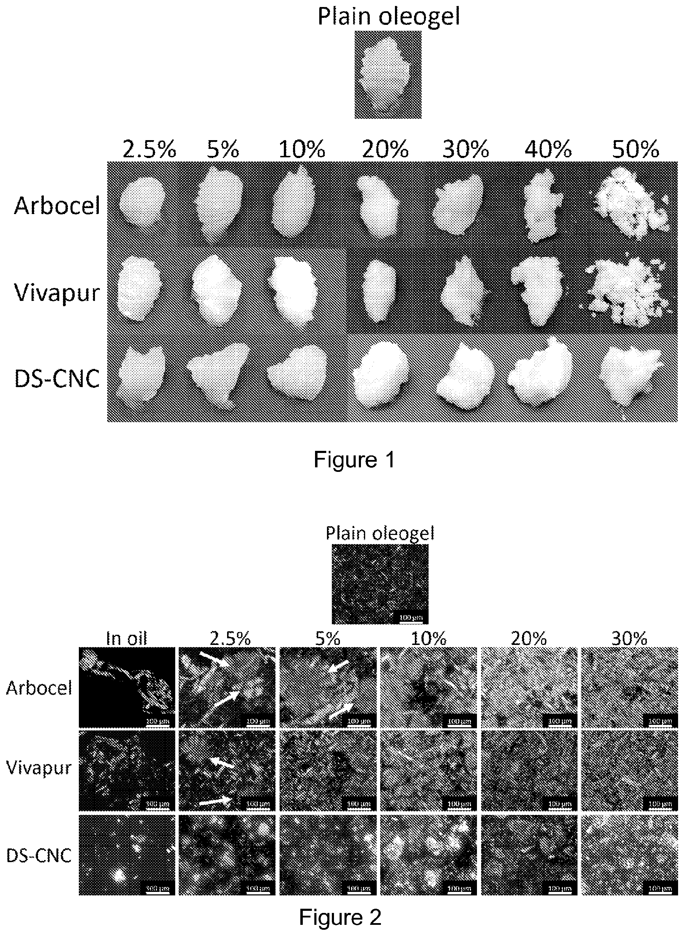

The monoglyceride-based oleogel appeared as a soft, semi-solid, spreadable lipid material (Figure 1, plain oleogel). Upon adding cellulose particles, composite oleogels with seemingly higher opacity were obtained. Progressive addition of cellulose turned the oleogel into a moldable material (20% to 40% Arbocel or Vivapur, or 30% to 50% DS-CNC) and eventually into a brittle one (50% Arbocel or Vivapur) (Figure 1). This indicated that the size and concentration of filler affected the overall structure of oleogels. As a result, microcrystalline celluloses, Arbocel, and Vivapur exhibited better structuring abilities at low concentrations than DS-CNC. The composite oleogel obtained with the largest and smallest-sized celluloses (Arbocel at 40% concentration and DS-CNC from 10% concentration onwards) were grainy, whereas composite oleogels containing Vivapur at all studied concentrations appeared smooth. Even 40% cellulose could not produce a stable gel without monoglycerides. The dispersion of cellulose and oil separated with time (data not shown) indicated the synergistic effect of monoglycerides and cellulose in the oil structuring.

Microscopic analyses were performed to understand the effect of cellulose particles on oleogel microstructure. Figure 2 shows polarized light micrographs of plain oleogel, micro- and nanocrystalline celluloses dispersed in oil, and composite oleogels with increasing weight fractions of Arbocel, Vivapur, and DS-CNC. Arbocel and Vivapur in oil appeared as elongated fibers with the first one being longer than the second one. On the other hand, DS-CNC in oil appeared as spherical aggregates; most of them were smaller compared to Arbocel and Vivapur. Thus, the total interfacial area relatively increases in the order of Arbocel, Vivapur, and DS-CNC. Plain oleogel was composed of platelet-like interconnected microcrystals of monoglycerides with dimensions between 10 and 50 µm. When celluloses were added to the oleogels at any concentration, the morphology of monoglyceride crystals changed from the platelet-like structure to spherulites with dimensions of 100-200 µm at low cellulose weight fraction (white arrows in Figure 2). With increasing cellulose amounts, a progressively jammed microstructure of cellulose and monoglyceride crystals was observed. At the same weight fraction of cellulose, the jamming was less apparent in oleogel with nanocrystalline cellulose (DS-CNC). An increase of cellulose concentrations to 40% and 50% led to a very dense microstructure (data not shown).

The observed microstructural changes of monoglyceride crystals upon cellulose addition could be attributed to their role as nucleating points during monoglyceride crystallization. The presence of particles or foreign materials are known to modify the morphology of lipid crystals. If the foreign material can be wetted by crystallizing molecules, heterogenous nucleation occurs as the energy barrier to form stable nuclei decreases. Due to the affinity between cellulose and monoglycerides, crystallization could have initiated from the surface of cellulose micro- and nanocrystals.

### Rheological properties and oil-retention ability

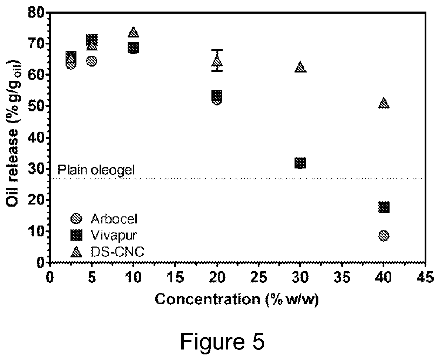

The rheological profiles of plain oleogel and composite oleogels from all three celluloses at different concentrations were evaluated. Oleogels displayed gel-like behavior, that is *G'* > *G"* for all studied systems (data not shown), and a yield stress *σ_{y},* taken as the maximum "peak stress" beyond which flow is induced. The addition of all cellulosic fillers increased the stiffness of the composite oleogels, indicated by increase in the moduli and yield stress from approximately 10² to 10⁴ Pa to a different degree depending on their weight fraction (Figures 3A to 3D). The order of reinforcement was Arbocel > Vivapur > DS-CNC, which is inversely proportional to their relative interfacial areas. As the concentration of the filler increased, the composite oleogels became more brittle as *G** = *σ*/*γ.* In most cases, at strain values >100%, stable flow was not obtained. To explore these effects further, oscillatory tests were performed to measure residual elasticity after inducing flow, herein simplified as a relative "recovery" ratio (Eq. 1 and Eq. 2) (Figure 4A) and scaled the complex moduli *G** as a function of weight fraction (Eq. 3) (Figure 4B). It was observed that celluloses retained the elasticity of oleogels, and the microcrystalline celluloses Arbocel and Vivapur were better than nanocrystalline cellulose (DS-CNC) at higher weight fraction. This was also observed in the higher rate constant (k) value obtained from fitting of the recovery ratio using a one-phase association model (Figure 5A, inset table). A possible explanation is that large particles occupy a larger volume and shield the plain oleogel network from damage compared to small particles at the same weight fraction. Scaling the moduli reveals that microcrystalline cellulose is a more effective structurant than nanocrystalline cellulose on a weight-fraction basis (Figure 4B). This can be visualized in the strong "jump" of the complex moduli and yield stress of microcrystalline-based composites at a concentration of 40%, as the fillers approach the maximum packing fraction of solids. The nonlinear local measures of elasticity and viscosity elucidated by Lissajous curves (data not shown) did not shown differences among fillers providing conclusive evidence that cellulose-based fillers act as granular rigid fillers.

Poor resistance of the oleogel network to retain the high amounts of incorporated oil during high-shear conditions largely limits the applications of oleogels. Therefore, the oil-retention ability that was measured during an accelerated oil-release test by centrifuging the samples shows the dependency of concentration and size of cellulose particles. Plain oleogels with a monoglyceride crystal network released approximately 25% oil (Figure 5). At cellulose weight fraction below 30%, composite oleogels released a higher amount of oil than the plain oleogel regardless of cellulose size. Above 30% concentration, the effect was cellulose size dependent with microcrystalline celluloses (Arbocel and Vivapur) and released less oil than DS-CNC and plain oleogel.

It is possible that the addition of filler particles adds flaws or modifies the tortuosity path in the gel-granular medium, easing the oil escape from the matrix at low concentrations. With the increasing concentration of cellulose towards the maximum packing fraction in the composite system, the oil escape is decreased due to an increase in tortuosity. The reduced oil release is also attributed to the increase in surface tension above the jamming point due to geometrical constraints that reduce the flowability of the system that transitions from "over-wet" to "dry-like" appearance. Crystalline spherulites that were observed in composite oleogels have low structuring ability compared to platelet-like crystals observed in plain oleogels. The lower oil-retention ability of composite oleogels contradicted their strong mechanical properties observed in the previous section. It should be noted that for the oil-release test, aliquots of molten oleogels were cooled directly in Eppendorf tubes and centrifuged to observe the oil release, avoiding sample transfer as in during rheological measurement. Hence the observed oil-release data may be overestimated and benefit most the plain oleogel.

The above results demonstrated the size-dependent role of crystalline celluloses in the structural reinforcement of monoglyceride-based oleogels. Cellulose particles were inactive fillers in the composite oleogels and provided a solid substrate for the growing monoglyceride crystals and enabled a better assembly of monoglyceride molecules. This effect was pronounced in oleogels containing microcrystalline cellulose particles. At the microstructural level, the crystal morphology of monoglycerides changed from platelet-like structure to spherulites. There were no significant changes in the thermal properties of oleogels. Crystalline celluloses improved the mechanical properties and elastic recovery of oleogels, and the effect was size and concentration dependent. The microcrystalline celluloses Arbocel and Vivapur exhibited better structuration abilities than the nanocrystalline cellulose DS-CNC at a given weight fraction in the composite system. The observed effect could be explained due to the jammed microstructure of the cellulose particles and monoglyceride crystals, which was evident beyond 30% for microcrystalline celluloses. The observed effect was also applicable in the oil-retention ability of composite oleogels during an accelerated oil-release test. Jammed structures from microcrystalline celluloses beyond 30% released less oil.

### EXAMPLE 2

### Croissant preparation

Composite oleogel containing 30 % Vivapur was tested as a laminating agent in croissants. Three types of croissants were prepared using: butter, oleogel, and butter and oleogel at a ratio of 1:3 as laminating agents. First, croissant dough was prepared by placing 500 g special wheat flour (Erikoisvehnäjauho, Myllyn Paras, Finland), 55 g table sugar, 40 g unsalted butter, and 12 g salt at low speed in a kneading bowl. A 11 g dry instant yeast was mixed with 140 g tap water and 140 g refrigerated whole milk with 3 % fat and added to the mix. The ingredients were mixed at low speed for 4 min. The dough was split into three even portions and spread on parchment paper dusted with flour and placed in the freezer for 30 min. A 93.3 g of shortening agent (either butter, oleogel or a mixture of butter and oleogel) was rolled into the dough and three-single folds were given to the dough with a 30 min interval between each fold. The dough was rolled to a thin sheet and one three-fold was given to the dough. The dough was placed in the refrigerator at 4 degrees for 15 min. This step was repeated twice. The dough was rolled into a rectangle shape 60 * 100 cm with about 3 mm thickness. The dough was cut lengthwise into 20 cm strips and the strips divided into triangles. A small cut of 2 cm was made in the top center of the triangle and rolled into a tight roll while stretching the dough. The croissants were placed on parchment paper and egg washed twice, proofed and baked at 220 degree Celsius for 20-30 min.

### Croissant

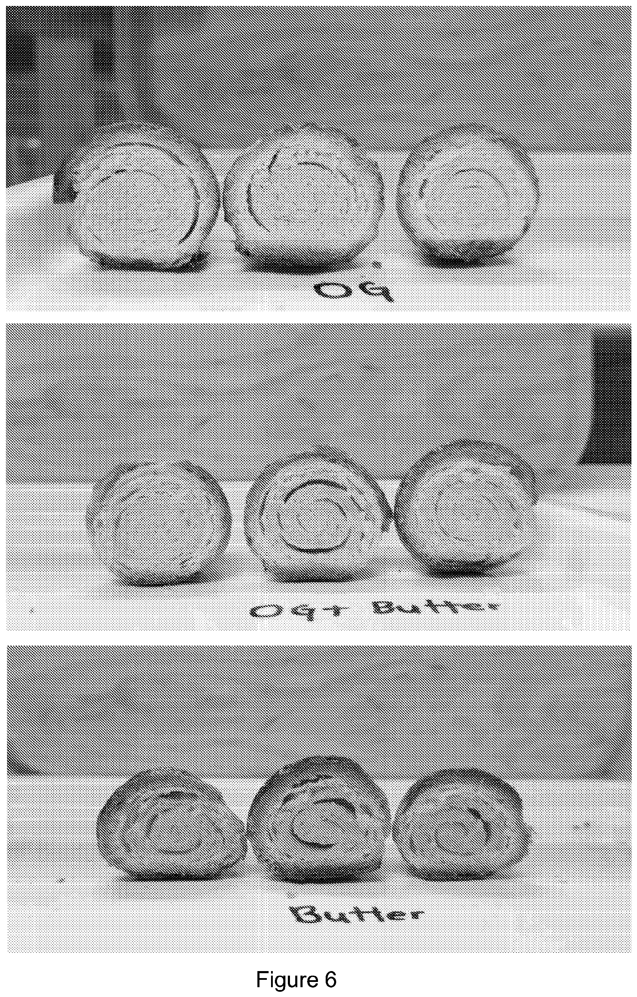

Composite oleogel (30 % Vivapur) gave a more uniform, better leavened structure to croissant and it was less oily than croissant with only butter as a shortening agent (Figure 6).

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A method, a product, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. A composition comprising a mixture comprising an oleogel and a filler, wherein the oleogel comprises a liquid or semi-solid fat composition and a gelator, and wherein the filler is in the form of solid particles, wherein the solid particles are inert particles that do not undergo a phase transition during the formation of the composition;
wherein the composition comprises 20 to 50 % (w/w) of the filler;
wherein the gelator comprises a monoglyceride, a fatty acid, a fatty alcohol, or any mixture or combination thereof, and the oleogel comprises 2.5 to 20 % (w/w) of the gelator;
wherein the gelator forms crystals, wherein the gelator crystals form a crystalline network in which the filler is embedded; and
wherein the solid particles have an average particle size in the range of 100 nm to 150 µm.

2. The composition according to claim 1, wherein the filler comprises or is cellulose, such as crystalline cellulose; resistant modified starch; xylan nanocrystals; chitin nanocrystals; starch, such as resistant starch; β-glucan; or any mixture or combination thereof.

3. The composition according to claim 1 or 2, wherein the composition comprises 20 % to 45 % (w/w), or 30 % to 40 % (w/w) of the filler.

4. The composition according to any one of claims 1 - 3, wherein the solid particles have an average particle size in the range of 10 to 100 µm; and/or wherein the solid particles have an aspect ratio in the range of 1:1000000 to 1:1.

5. The composition according to any one of claims 1 - 4, wherein the liquid or semi-solid fat composition comprises or is a vegetable oil, such as rapeseed, canola, and/or palm oil; a long-chain triacyl glycerol; a medium-chain triacyl glycerol; a short-chain triacyl glycerol; or any combination or mixture thereof.

6. The composition according to any one of claims 1 - 5, wherein the composition is a semi-solid or solid composition.

7. The composition according to any one of claims 1 - 6, wherein the composition has a complex modulus in the range of 0.1 - 1.1 MPa and/or a yield stress in the range of 0.07 - 6 kPa.

8. A method for producing a composition according to any one of claims 1 - 7, wherein the method comprises mixing the liquid or semi-solid fat composition, the gelator and the filler at a temperature higher than the melting point of the gelator; and cooling the mixture, thereby obtaining the composition.

9. The method according to claim 8, wherein the filler is comminuted, such as milled, prior to the production of the composition.

10. Use of the composition according to any one of claims 1 - 7 in preparing a food product or in laminating dough.

11. The use according to claim 10, wherein the food product is a bakery product, such as a croissant, a puff pastry, or a Danish pastry; a dough, such as a laminated dough; a spread; ice cream; chocolate; or a meat or dairy analogue, such as a cheese mimetic.

12. A method for preparing a laminated dough, the method comprising providing a dough and a composition according to any one of claims 1 - 7; disposing the composition on the dough, thereby forming a layered composition comprising a layer of the composition on a layer of the dough; and folding the layered composition on itself one or more than one time to form the laminated dough.

## Patentansprüche

1. Zusammensetzung, die ein Gemisch umfassend ein Oleogel und einen Füllstoff umfasst, wobei das Oleogel eine flüssige oder halbfeste Fettzusammensetzung und einen Gelator umfasst und wobei der Füllstoff in Form fester Partikel vorliegt, wobei es sich bei den festen Partikeln um inerte Partikel handelt, die während der Bildung der Zusammensetzung keinen Phasenübergang durchlaufen;
wobei die Zusammensetzung 20 bis 50 % (Gew.-%) des Füllstoffs enthält;
wobei der Gelator ein Monoglycerid, eine Fettsäure, einen Fettalkohol oder eine beliebige Mischung oder Kombination davon umfasst und das Oleogel 2,5 bis 20 % (Gew.-%) des Gelators enthält;
wobei der Gelator Kristalle bildet, wobei die Gelatorkristalle ein kristallines Netzwerk bilden, in das der Füllstoff eingebettet ist; und
wobei die festen Partikel eine durchschnittliche Partikelgröße im Bereich von 100 nm bis 150 µm aufweisen.

2. Zusammensetzung nach Anspruch 1, wobei der Füllstoff Cellulose, wie beispielsweise kristalline Cellulose, resistente modifizierte Stärke, Xylan-Nanokristalle, Chitin-Nanokristalle, Stärke, wie beispielsweise resistente Stärke, β-Glucan oder eine beliebige Mischung oder Kombination davon umfasst oder aus diesen besteht.

3. Zusammensetzung nach Anspruch 1 oder 2, wobei die Zusammensetzung 20 % bis 45 % (Gew.-%) oder 30 % bis 40 % (Gew.-%) des Füllstoffs enthält.

4. Zusammensetzung nach einem der Ansprüche 1 bis 3, wobei die festen Partikel eine durchschnittliche Partikelgröße im Bereich von 10 bis 100 µm aufweisen; und/oder wobei die festen Partikel ein Aspektverhältnis im Bereich von 1:1000 000 bis 1:1 aufweisen.

5. Zusammensetzung nach einem der Ansprüche 1 bis 4, wobei die flüssige oder halbfeste Fettzusammensetzung ein Pflanzenöl, wie beispielsweise Raps-, Canola- und/oder Palmöl, ein langkettiges Triacylglycerin, ein mittelkettiges Triacylglycerin, ein kurzkettiges Triacylglycerin oder eine beliebige Kombination oder Mischung davon umfasst oder aus diesen besteht.

6. Zusammensetzung nach einem der Ansprüche 1 bis 5, wobei es sich bei der Zusammensetzung um eine halbfeste oder feste Zusammensetzung handelt.

7. Zusammensetzung nach einem der Ansprüche 1 bis 6, wobei die Zusammensetzung einen komplexen Modul im Bereich von 0,1 bis 1,1 MPa und/oder eine Streckgrenze im Bereich von 0,07 bis 6 kPa aufweist.

8. Verfahren zur Herstellung einer Zusammensetzung nach einem der Ansprüche 1 bis 7, wobei das Verfahren das Mischen der flüssigen oder halbfesten Fettzusammensetzung, des Gelators und des Füllstoffs bei einer Temperatur oberhalb des Schmelzpunkts des Gelators sowie das Abkühlen der Mischung umfasst, wodurch die Zusammensetzung erhalten wird.

9. Verfahren nach Anspruch 8, wobei der Füllstoff vor der Herstellung der Zusammensetzung zerkleinert, beispielsweise gemahlen, wird.

10. Verwendung der Zusammensetzung gemäß einem der Ansprüche 1 bis 7 zur Herstellung eines Lebensmittels oder zum Laminieren von Teig.

11. Verwendung nach Anspruch 10, wobei das Lebensmittel ein Backprodukt, wie beispielsweise ein Croissant, ein Blätterteiggebäck oder ein Plundergebäck, ein Teig, wie beispielsweise ein laminierter Teig, ein Brotaufstrich, Speiseeis, Schokolade oder ein Fleisch- oder Milchproduktersatz, wie beispielsweise ein Käseersatz, ist.

12. Verfahren zur Herstellung eines laminierten Teigs, wobei das Verfahren das Bereitstellen eines Teigs und einer Zusammensetzung nach einem der Ansprüche 1 bis 7 umfasst; Aufbringen der Zusammensetzung auf den Teig, wodurch eine geschichtete Zusammensetzung gebildet wird, die eine Schicht der Zusammensetzung auf einer Schicht des Teigs umfasst; und ein- oder mehrmaliges Zusammenfalten der geschichteten Zusammensetzung, um den laminierten Teig zu bilden.

## Revendications

1. Composition comprenant un mélange comprenant
un oléogel et une charge, dans laquelle l'oléogel comprend une composition grasse liquide ou semi-solide et un gélifiant, et dans laquelle la charge se présente sous la forme de particules solides, dans laquelle les particules solides sont des particules inertes qui ne subissent pas de transition de phase pendant la formation de la composition ;
dans laquelle la composition comprend de 20 à 50 % (p/p) de la charge ;
dans laquelle le gélifiant comprend un monoglycéride, un acide gras, un alcool gras, ou tout mélange ou toute combinaison de ceux-ci, et l'oléogel comprend de 2,5 à 20 % (p/p) du gélifiant ;
dans laquelle le gélifiant forme des cristaux, dans laquelle les cristaux du gélifiant forment un réseau cristallin dans lequel la charge est incorporée ; et
dans laquelle les particules solides présentent une taille moyenne de particules dans la plage de 100 nm à 150 µm.

2. Composition selon la revendication 1, dans laquelle la charge comprend ou est de la cellulose, telle que de la cellulose cristalline ; de l'amidon modifié résistant ; des nanocristaux de xylane ; des nanocristaux de chitine ; de l'amidon, tel que de l'amidon résistant ; du ß-glucane ; ou tout mélange ou toute combinaison de ceux-ci.

3. Composition selon la revendication 1 ou la revendication 2, dans laquelle la composition comprend de 20 % à 45 % (p/p), ou de 30 % à 40 % (p/p) de la charge.

4. Composition selon l'une quelconque des revendications 1 à 3, dans laquelle les particules solides présentent une taille moyenne de particules se situant dans la plage de 10 à 100 µm ; et/ou dans laquelle les particules solides présentent un rapport d'aspect se situant dans la plage de 1:1000000 à 1:1.

5. Composition selon l'une quelconque des revendications 1 à 4, dans laquelle la composition grasse liquide ou semi-solide comprend ou est une huile végétale, telle que de l'huile de colza, de canola et/ou de palme ; un triacylglycérol à chaîne longue ;
un triacylglycérol à chaîne moyenne ; un triacylglycérol à chaîne courte ; ou toute combinaison ou tout mélange de ceux-ci.

6. Composition selon l'une quelconque des revendications 1 à 5, dans laquelle la composition est une composition semi-solide ou solide.

7. Composition selon l'une quelconque des revendications 1 à 6, dans laquelle la composition présente un module complexe dans la plage de 0,1 à 1,1 MPa et/ou une limite d'élasticité dans la plage de 0,07 à 6 kPa.

8. Procédé de production d'une composition selon l'une quelconque des revendications 1 à 7, dans lequel le procédé comprend le mélange de la composition grasse liquide ou semi-solide, du gélifiant et de la charge à une température supérieure au point de fusion du gélifiant ; et le refroidissement du mélange, pour ainsi obtenir la composition.

9. Procédé selon la revendication 8, dans lequel la charge est fragmentée, par exemple broyée, avant la production de la composition.

10. Utilisation de la composition selon l'une quelconque des revendications 1 à 7 dans la préparation d'un produit alimentaire ou dans la préparation d'une pâte en couches feuilletées.

11. Utilisation selon la revendication 10, dans laquelle le produit alimentaire est un produit de boulangerie, tel qu'un croissant, une pâte feuilletée ou une pâtisserie danoise ; une pâte, telle qu'une pâte en couches feuilletées ; une pâte à tartiner ; de la crème glacée ; du chocolat ; ou un analogue de viande ou de produit laitier, tel qu'un succédané de fromage.

12. Procédé de préparation d'une pâte en couches feuilletées, le procédé comprenant la fourniture d'une pâte et d'une composition selon l'une quelconque des revendications 1 à 7 ; la disposition de la composition sur la pâte, formant ainsi une composition stratifiée comprenant une couche de la composition sur une couche de la pâte ; et le pliage de la composition stratifiée sur elle-même une ou plusieurs fois pour former la pâte en couches feuilletées.
